# EUROPÄISCHE PATENTSCHRIFT

(11) **EP 3 151 080 B1**
(45) Veröffentlichungstag und Bekanntmachung des Hinweises auf die Patenterteilung: **24.03.2021**
(21) Anmeldenummer: 16002043.4
(22) Anmeldetag: 21.09.2016
(51) Int. Cl.: G05D 1/00, G05D 1/06, G08G 5/00, G08G 5/02, G08G 5/06, B64C 39/02

(54) **VERFAHREN ZUR SICHEREN LANDUNG EINES UNBEMANNTEN LUFTFAHRZEUGS**
METHOD FOR SECURE LANDING OF AN UNMANNED AIRCRAFT
PROCÉDÉ D'ATTERRISSAGE SECURISÉ D'UN AERONEF SANS PILOTE

(30) Priorität: 29.09.2015 DE 102015012477
(43) Veröffentlichungstag der Anmeldung: 05.04.2017
(73) Patentinhaber: Airbus Defence and Space GmbH, 85521 Ottobrunn (DE)
(72) Erfinder: HIEBL, Manfred, 86633 Neuburg a. d. Donau (DE)
(74) Vertreter: LKGLOBAL Lorenz & Kopf PartG mbB Patentanwälte

(56) Entgegenhaltungen:
- EP-A1- 1 657 611
- EP-A1- 2 853 974
- US-A1- 2007 129 855
- US-A1- 2008 154 447
- US-B1- 6 377 875

## Beschreibung

Verschiedene Ausführungsformen betreffen allgemein ein unbemanntes Luftfahrzeug, ein Verfahren zur sicheren Landung eines unbemannten Luftfahrzeugs und eine Bodenkontrollstation zur Steuerung und/oder Überwachung wenigstens eines unbemannten Luftfahrzeugs.

Bei einem Datenlinkausfall ist ein unbemanntes Luftfahrzeug entweder teilweise oder gar nicht mehr ansprech- und kontrollierbar. Es befindet sich in diesem Flugzustand sozusagen in einem "autonomen" Modus, in dem es völlig auf sich allein gestellt ist. Bei bemannten Luftfahrzeugen sind automatische Landeverfahren bekannt, wonach ein Luftfahrzeugführer in den Landeanflug nicht mehr persönlich eingreifen muss, sobald er das automatische Anflugverfahren initiiert hat. Dabei verfügt der Luftfahrzeugführer in der Regel über eine existierende Sprechfunkverbindung zur Flugverkehrskontrolle und ist damit kooperativ. Ist die Sprechfunkverbindung hingegen ausgefallen, erscheint das Flugzeug in einer Kontrollzone trotzdem noch auf den Radarschirmen, der Pilot kann durch Sichtzeichen (Hin-undher-Wippen um die Rollachse) oder durch Lichtsignale an den Tower auf seine Lage aufmerksam machen. Ein bemanntes Flugzeug ist insoweit kooperativ, als es seine Absicht, eine Sicherheitslandung durchzuführen, kundtun kann und dadurch von den Fluglotsen Priorität eingeräumt bekommen kann. Ein unbemanntes Luftfahrzeug, das irgendwo auf seiner Mission einen irreversiblen Datenlinkausfall erfährt, zeigt aber lediglich indirekt an, dass es nicht mehr kommandiert werden kann, da es auf Kommandos nicht mehr reagiert, kann jedoch seine Absichten, wann und wo es zu landen gedenkt, der Flugverkehrskontrollstelle nicht mitteilen. Es verhält sich also klassisch nicht-kooperativ.

Die EP 1 657 611 A1 beschreibt ein autonomes Luftfahrzeug mit einem Flugsteuerungssystem und einem automatischen Notfallgenerator zur automatischen Bestimmung einer Notfall-Luftfahrzeugroute zur Verwendung durch das Flugsteuerungssystem als Reaktion auf Notfälle, die das Luftfahrzeug erfährt. Ein Verfahren zur automatischen Bestimmung einer Notfall-Luftfahrzeugroute ist ebenfalls vorgesehen.

Die US 6 377 875 B1 beschreibt die Vermeidung eines unkontrollierten Fluges eines ferngesteuerten unbemannten Luftfahrzeugs (UAV). Dabei wird bei Verlust des Funkkontakts zwischen einer Kontrollstation und dem UAV das UAV auf einer vorprogrammierten Sicherheitsroute geflogen und bei Bedarf wird das UAV auf einen von der Kontrollstation aus ferngesteuerten Flugpfad geleitet. Im Falle einer Unterbrechung des Funkkontakts wird das UAV auf einer Ersatzroute geflogen, die mit Bordausrüstung berechnet wird, ohne aktive Intervention von der entfernten Kontrollstation. Die EP 2 853 974 A1 beschreibt ein Verfahren zur autonomen Steuerung eines ferngesteuerten Luftfahrzeugs, wobei ein Flugoperator das Luftfahrzeug mit den folgenden Schritten steuert: Initialisieren einer Datenverbindung zwischen dem Luftfahrzeug und einem Bodensegment; Bestimmen eines Betriebszustands der Datenverbindung während der Verwendung der Datenverbindung; und Ausgeben mindestens eines autonomen Steuerbefehls, wenn als Ergebnis der Bestimmung ein Verlust der Datenverbindung bestimmt wird.

Die US 2007/129855 A1 beschreibt ein Flugmanagementsystem für bemannte oder unbemannte Luftfahrzeuge, die sich in einer Notsituation befinden, wie z.B. Entführung des Luftfahrzeugs, medizinische Notfälle, Ausfallsituationen, die z.B. die Antriebs-, Druck- oder Kommunikationsfunktionen betreffen. Eine Vorrichtung und ein Verfahren zur automatischen oder halbautomatischen Generierung eines Flugplans ist vorgesehen.

Die US 2008/154447 A1 beschreibt ein Routing-Tool. Ein Verfahren und ein System umfassen den Empfang von Flugdaten und geographischen Daten im Flugzeug und die Erzeugung von Routendaten auf der Grundlage der Flugdaten und der geographischen Daten. Die Routendaten liefern Informationen über die für das Flugzeug erreichbaren Landegebiete.

Davon ausgehend ist es Aufgabe der Erfindung, ein verbessertes unbemanntes Luftfahrzeug anzugeben.

Gemäß der Erfindung ist ein Verfahren mit den Merkmalen des Anspruchs 1 angegeben.

Als unbemanntes Luftfahrzeug kann auch ein klassisches bemanntes Luftfahrzeug verstanden werden, dass bei Ausfall der Luftfahrzeugführer wenigstens zweitweise "unbemannt" ist, bzw. ohne menschliche Kontrolle ist.

Die Kommunikationsverbindung kann beispielsweise ein Command- und-Control-Datenlink zwischen dem unbemannten Luftfahrzeug (RPAS - Remotely Piloted Aircraft System) und der Bodenkontrollstation (RPAS Controller) sein.

Der Erfindung liegt der Gedanke zugrunde, das ein unbemanntes Luftfahrzeug sicher zur Landung gebracht werden kann, indem das Luftfahrzeug bei Ausfall der Kommunikationsverbindung zu der das Luftfahrzeug kontrollierenden Bodenkontrollstation eigenständig auf Grundlage einer Reihe zur Verfügung stehenden Informationen eigenständig in der Lage ist, abhängig von den aktuellen Wind- und Wetterbedingungen, einen nahegelegenen geeigneten Landeplatz aus einer Liste von verfügbaren Landeplätzen auszuwählen und das Luftfahrzeug entsprechend den lokalen Vorgaben des ausgewählten Landeplatzes zu landen. Hierbei erfolgt die Auswahl des geeigneten Landeplatzes nach vorgegebenen Regeln, so dass eine zuständige Luftverkehrskontrolle den für die Landung zu durchquerenden Luftraum und den geeigneten Landeplatz sperrt. Dadurch, dass die Regeln, nach denen die Auswahl des geeigneten Landeplatzes durch das Luftfahrzeug erfolgt der Luftverkehrskontrolle bekannt sind, kommt die Luftverkehrskontrolle bei identischer Datengrundlage, die vorliegt, zu dem gleichen geeigneten Landeplatz und kann ohne Datenaustausch mit dem unbemannten Luftfahrzeug den entsprechenden Luftraum und Landeplatz für die Durchquerung bzw. Landung des unbemannten Luftfahrzeugs gezielt sperren. Somit liegt zwischen dem Flugzeughersteller des unbemannten Luftfahrzeugs bzw. dem Betreiber des unbemannten Luftfahrzeugs und den Flugsicherheitsbehörde ein vereinbartes kooperatives Landeverfahren im Fall einer irreversiblen Datenlinkunterbrechung vor.

Durch das hierin beschriebene Luftfahrzeug sind im Falle eines irreversiblen Datenlinkausfalls ein schnellstmögliches Handeln und ein sofortiges Anfliegen eines Ausweichflugplatzes möglich. Bei einem irreversiblen Datenlinkausfall ist jede Minute von Bedeutung, die das Flugzeug länger in der Luft weilt, da seine Unberechenbarkeit erhöht wird und die für die Flugsicherheit verantwortlichen Behörden in desto größere Nöte gebracht werden können.

Im Falle eines Datenlinkausfalls sind gesetzliche Vereinbarungen über das zu erwartende Flugverhalten zwischen dem Hersteller und dem Gesetzgeber vorab zu treffen, damit letzterem Überraschungen in Bezug auf die Verkehrssicherheit des Luftfahrzeugs erspart bleiben und die gesetzlich vereinbarte Kooperation zwischen dem Teilnehmer am Luftverkehr und den Regulierungsbehörden gewährleistet werden kann.

Das hierin beschriebene Luftfahrzeug stellt ein kooperatives System im Hinblick auf eine mögliche Verkehrszulassung dar.

Die Bezeichnung "nahegelegen" bezeichnet einen Umkreis um die aktuelle Position des Luftfahrzeugs, der mit den zur Verfügung stehenden Energieressourcen des Luftfahrzeugs noch erreichbar ist, vorzugsweise jedoch möglichst nahe liegt.

Gemäß einer bevorzugten Ausführungsform weist das Navigationssystem einen Speicher auf. In dem Speicher sind wenigstens nahegelegene Landeplätze und die aktuellen Wind- und Wetterdaten der näheren Umgebung des Luftfahrzeugs und der nahegelegenen Landeplätzen gespeichert. Zur Aktualisierung des Navigationssystems und der gespeicherten Landeplätze kann beispielsweise vor Abflug des unbemannten Luftfahrzeugs beispielsweise ein Auszug aus einer vollständigen Datenbank mit verfügbaren Landeplätzen geladen werden oder die Daten können während des Fluges für wenigstens einen Teil des Flugabschnittes sukzessive über beispielsweise eine Kommunikationsverbindung mit der Bodenkontrollstation nachgeladen werden. Neben den eigentlichen geographischen Koordinaten des Landeplatzes können auch weitere Informationen zu dem Landeplatz, wie beispielsweise lokale Überflugverbotszonen, geographische Eckpunkte von Platzrunden, Landeschwellen, lokale Navigationshilfsobjekte oder weitere Daten enthalten. Eine Datenbank, in der Ausweichflugplätze mit genauen geographischen Angaben über Start- und Landeschwellen und geeignete Navigationshilfen im fliegenden Segment abgelegt sind.

Dies hat den Vorteil, dass das unbemannte Luftfahrzeug zu jeder Zeit eine Liste der wenigstens nahegelegenen Landeplätze zur Verfügung hat. Ein weiterer Vorteil besteht darin, dass hierdurch ein sicheres Landen gegen den Wind möglich ist und ein sicheres Ausweichen bei signifikanten Wettererscheinungen ermöglicht wird.

Die Bezeichnung "Speicher" bezieht sich hier im Wesentlichen auf eine beliebige Art von Speicher, der Daten empfangen und speichern kann. Der Speicher ist im Allgemeinen übereinstimmend mit Speicher, der z. B. von einem Computerprozessor oder in einem Computersystem eingesetzt werden kann. Insbesondere bezieht sich Speicher, per Definition hierin, auf eine beliebige Art von Speicher, auf den während des Betriebs des Computers, der den Speicher einsetzt, geschrieben und von dem gelesen werden kann. Der Speicher kann z. B. Direktzugriffsspeicher (Random Access Memory oder RAM) umfassen. Der RAM kann z. B. statischer RAM (SRAM) sein. Andere Speichertypen umfassen, ohne hierauf beschränkt zu sein, dynamischen Direktzugriffsspeicher (Dynamic Random Access Memory oder DRAM) und verschiedene Speicherbauformen, die auf Latches, Flip-Flops und anderen bistabilen Konstrukten (z. B. Memristoren) basieren.

Gemäß einer bevorzugten Ausführungsform ist die Flugkontrolleinheit weiter dafür vorgesehen, anhand der abgespeicherten Wind- und Wetterdaten von nahegelegenen Landeplätzen bei einer zu erwartenden Ankunftszeit an dem Landeplatz, einen geeigneten Landeplatz auszuwählen. Die Auswahl des geeigneten Landeplatzes erfolgt nach festgelegten Regeln. Um die Auswahl des geeigneten Landeplatzes auch parallel durch eine Bodenkontrollstation durchführen zu können, sind die Regeln, nach denen das Luftfahrzeug einen geeigneten Landeplatz auswählt, zuvor festgelegt. Genauer gesagt sind die Auswahlkriterien, nach denen die Auswahl des geeigneten Landeplatzes erfolgt sowohl dem Luftfahrzeug als auch eine zuständige Luftverkehrskontrolle bekannt, so dass das Luftfahrzeug und die Luftverkehrskontrolle, in Abhängigkeit von beispielsweise der letzten Position des Luftfahrzeugs bei Abbruch der Kommunikationsverbindungen und in Abhängigkeit von beispielsweise den gegebenen Wetterbedingungen der nächstgelegenen Landeplätze, den identischen Landeplatz als geeigneten Landeplatz ermitteln. Dadurch ist die Luftverkehrskontrolle in der Lage, alle notwendigen Maßnahmen vor Ort, d. h. am ausgewählten Landeplatz, anzuweisen bzw. durchzuführen, so dass eine sichere Landung des Luftfahrzeugs ermöglicht werden kann. Hierzu kann es beispielsweise erforderlich sein, dass die Bodenkontrollstation den Luftraum an dem ausgewählten geeigneten Landeplatz bzw. die ausgewählte Landebahn für die Landung des Luftfahrzeugs wenigstens zweitweise sperrt.

Es wird hierdurch eine im Wesentlichen autonome An-Bord-Routenplanung durchgeführt, die eine Landung unter meteorologisch ungünstigen (signifikanten) Wetterbedingungen verhindert und das Luftfahrzeug auf einen anderen Ausweichflugplatz umlenkt.

Gemäß einer bevorzugten Ausführungsform ist die Flugkontrolleinheit weiter dafür vorgesehen, eine Flugroute zu dem ausgewählten Landeplatz zu ermitteln, wobei die Ermittlung der Flugroute nach festgelegten Regeln erfolgt. Vorzugsweise erfolgt die Auswahl bzw. Festlegung der Flugroute zu dem ausgewählten Landeplatz auf einem möglichst kurzen Weg, d. h. die Flugkontrolleinheit wird das Fluggerät möglichst auf den nächstgelegenen Landeplatz leiten, der in Abhängigkeit von den vor Ort vorherrschenden Wetterbedingungen für die Landung geeignet ist. Dies hat den Vorteil, dass die Ermittlung der Flugroute nach klaren Regeln erfolgt und die Flugkontrolle am Boden entsprechend diesen Regeln den Luftraum bzw. den Landeplatz für die Landung des Fluggeräts wenigstens zeitweise sperren kann.

Die Bezeichnung "Regeln" bezieht sich hier im Wesentlichen auf Anweisungen, die von der Flugverkehrskontrolle und von der Flugkontrolleinheit angewendet werden und nach denen die Entscheidung für die Auswahl eines geeigneten Landeplatzes erfolgt. Beispielsweise können die Regeln darin bestehen, dass beispielsweise unter Ausnutzung der Daten einer Datenbank mit Informationen über beispielsweise in der momentanen Umgebung des Fluggeräts vorhandene gesperrte Gebiete und verfügbare Landeplätze und der zur Verfügung stehenden Wind- und Wetterdaten für den ausgewählten Landeplatz das Fluggerät beispielsweise ausgehend von der aktuellen Position auf direktem Weg zu der Platzrunde des ausgewählten Landeplatzes geführt wird.

Entsprechend der Ermittlung der Flugroute, wird aufgrund der Windrichtung die geeignete Landeschwelle erkannt und während des Landeanfluges der entsprechende Vorhaltewinkel so bestimmt, dass daraus die erwartete Ankunftszeit am Landeplatz berechnet werden kann.

Zu dem Zeitpunkt, bei dem die Überwachungseinheit einen irreversible Datenlinkausfall des Luftfahrzeugs zu der Bodenkontrollstation erkennt, werden die aktuellen Positions- und Geschwindigkeitsdaten abgespeichert und die kinematischen Bewegungsgrößen unter vorübergehender Beibehaltung des Kurses über Grund und der Fluggeschwindigkeit des Luftfahrzeugs werden vorzugsweise eingefroren.

Damit das unbemannte Luftfahrzeug die Flugroute zu einem geeigneten Landeplatz ermitteln kann, führt das Luftfahrzeug beispielsweise für sein Missionsgebiet einen gültigen Datenbankauszug mit, in dem die nahegelegenen Ausweichflugplätze oder Landeplätze mit Angabe der geographischen Koordinaten des Flugfeldes, der Start- und Landeschwelle sowie von markanten Peilobjekten am oder um das Flugplatzgelände abgelegt sind.

Das unbemannte Luftfahrzeug kann auf die für sein Missionsgebiet geltenden und in einem beispielsweise überschreibbaren Speicher gespeicherten aktuellen Wetterdaten, insbesondere die darin enthaltenen Flugplatzwetterdaten des Ausweichflugplatzes, zugreifen und daraus nebst signifikanten Wettererscheinungen insbesondere die am Landeplatz herrschende Windrichtung und Windstärke zum erwarteten Ankunftszeitpunkt entnehmen.

Gemäß einer bevorzugten Ausführungsform erfolgt die Ermittlung der Flugroute mittels Koppelnavigation. Alternativ kann die Ermittlung der Flugroute auch mittels Dopplernavigation oder Trägheitsnavigation erfolgen. Bei der Koppelnavigation kann das unbemannte Luftfahrzeug ausgehend von der letzten bekannten Position aus die Navigation zu dem ausgewählten geeigneten Landeplatz durchführen. Dies hat den Vorteil, dass für kurze Zeiträume, in denen das Luftfahrzeug in der Regel gelandet sein sollte, eine möglichst genaue Navigation möglich ist.

Die nach dem Luftrecht zu erwartende Reaktion des Luftfahrzeuges (kooperatives System), insbesondere die Wahl des geeigneten Ausweichflugplatzes, kann beispielsweise in einer rechtsverbindlichen Form zwischen dem Flugzeughersteller und der Flugsicherung vorher bekanntgemacht worden sein, damit die Flugverkehrskontrolle die Reaktionen des Flugzeuges ebenfalls kennt und sich darauf einstellen kann.

Das unbemannte Luftfahrzeug hat demnach beispielsweise nach den zwischen dem Flugzeughersteller und der Deutschen Flugsicherung o.ä. rechtsverbindlich vereinbarten Verfahren beispielsweise in die Betriebsart "Koppelnavigation" überzugehen und die Flugroute anhand seiner zuletzt eingefrorenen Flugdaten selbständig (autonom) festlegen, womit auch die Flugverkehrskontrollstelle in den beabsichtigten Flugweg kooperativ eingebunden wird.

Dies hat den Vorteil, dass die Reaktionen des unbemannten Luftfahrzeugs damit aufgrund bestimmter Vereinbarungen bzw. gesetzlicher Vorgaben eindeutig festgelegt sind und der Nachvollziehbarkeit offengelegt sind.

Gemäß einer bevorzugten Ausführungsform ist die ermittelte Flugroute fortlaufend durch regelmäßige Kreuzpeilungen zu abgespeicherten lokalen Zielen korrigierbar. Die Kreuzpeilung erfolgt vorzugsweise durch trigonometrische Berechnung mit Hilfe der GPS-Positionen. Bei jeglicher Triangulation ist es von Vorteil, dass die Messung möglichst früh ausgeführt wird, um die Genauigkeit zu erhöhen. Für die Wahl geeigneter Peilziele ist dies vorzugsweise zu berücksichtigen.
Die hat den Vorteil, dass durch aktives Nachkorrigieren der Navigationsgrößen Verfahrensfehler minimiert werden können.

Die Ermittlung der momentanen Flughöhe über Grund des Luftfahrzeugs kann beispielsweise mittels eines Laser- oder Radarhöhenmesser erfolgen. Diese Höhendaten können der Flugkontrolleinheit bereitgestellt werden, um Höhenkorrekturen an das Auftriebs- und Vortriebssystem übermitteln zu können.

Gemäß einer bevorzugten Ausführungsform erfolgen Richtungs-und/oder Kursänderungen durch festgelegte Standardkurven an den, durch eine Platzrunde am ausgewählten Landeplatz festgelegten Orten. Wenn das unbemannte Luftfahrzeug beispielsweise in die Platzrunde einfliegt, ist es von Vorteil, wenn das unbemannte Luftfahrzeug auf dem Peilstrahl "reitet" und nicht in einer sogenannten Hundekurve anfliegt. Der Peilstrahl ist eine Gerade durch zwei Eckpunkte der Platzrunde. Damit das unbemannte Luftfahrzeug auf den Peilstrahl kommt, ist es vorteilhaft, wenn die Kreuzpeilung im Azimut gegen Null konvergiert. Durch die automatische Flugregelung ist anschließend vorzugsweise noch der Cross track error zu minimieren. Vorzugsweise beim Blindanflug auf die Landebahn ist dies von Vorteil, um im windabhängigen Schräganflug ein zentrales Aufsetzen zu ermöglichen. Die Bodenkoordinaten der Landeschwelle sind vorzugsweise für die vertikale Sinkbewegung von Interesse. Sind die Bodenkoordinaten der Landeschwelle nicht bekannt, kann das unbemannte Luftfahrzeug landen, setzt unter Umständen beim Landen etwas härter auf.

Zusätzlich zur azimutalen Kreuzpeilung ist noch die vertikale Deckungspeilung für die Ansteuerung und die Minimierung der seitlichen Abdrift durch Wind von Bedeutung. Der entferntere Eckpunkt der Platzrunde wird dabei über dem nahegelegeneren (rechnerisch) gepeilt. Durch Minimierung dieser Deckungspeilung gelangt das anfliegende UAV exakt in die angegebene Sollhöhe der Platzrunde und kann von dort aus den sicheren Sinkflug einleiten.

Gemäß einer bevorzugten Ausführungsform ist die Flugkontrolleinheit weiter dafür vorgesehen, eine geeignete Landeschwelle der wenigstens zwei möglichen Landeschwellen des ausgewählten Landeplatzes zu ermitteln. Eine Landeschwelle, (englisch threshold, THR) kennzeichnet normalerweise den Beginn der Landebahn auf einem Flugplatz. Sie wird mit weißer Farbe als Querbalken markiert.
Dies hat den Vorteil, dass die Landung des unbemannten Flugzeugs in dem dafür vorgesehenen Bereich der Landebahn erfolgen kann und eine noch genügend lange Landebahn für das Ausrollen des Luftfahrzeugs bereitsteht.

Gemäß einer bevorzugten Ausführungsform weist das Flugkontrollsystem weiter eine Entfernungsmessungsvorrichtung auf. Die Entfernungsmessungsvorrichtung ist eingerichtet, im Landeanflug regelmäßig den Abstand zur Landebahn zu ermitteln, um die ermittelte Flugroute bei Abweichungen zu korrigieren. Die Entfernungsmessung kann beispielsweise anhand markanter Objekte im Bereich der Landebahn oder der unmittelbaren oder näheren Umgebung des Landeplatzes erfolgen. Derartige markante Objekte können beispielsweise anhand ihrer geographischen Koordinaten dem Navigationssystem des unbemannten Luftfahrzeugs bereitstehen. Die eigentliche Entfernungsmessung kann beispielsweise mittels eines Lasers oder dergleichen erfolgen. Dies hat den Vorteil, dass die Genauigkeit für die Landung des unbemannten Luftfahrzeugs erhöht werden kann.

Gemäß einer bevorzugten Ausführungsform ist die Flugkontrolleinheit weiter dafür vorgesehen, das Fluggerät durch regelmäßige Kreuzpeilungen mittels GNSS (Global Navigation Satellite System) -Messungen zu abgespeicherten Objekten am ausgewählten Landeplatz sicher zu landen. Hierbei wird davon ausgegangen, dass das GNSS-System des Fluggeräts noch funktionsfähig ist. Vorzugsweise weist das Luftfahrzeug mehrfach redundante GNSS-Systeme auf, so dass selbst bei Ausfall eines GNSS-Systems ein bzw. sogar zwei Ersatz-GNSS-Systeme zur Verfügung stehen. Dies hat den Vorteil, dass die Genauigkeit für die Landung des unbemannten Luftfahrzeugs erhöht werden kann.

Das Luftfahrzeug kann seine zu Beginn durch Koppelnavigation festgelegte Route durch regelmäßige Abstandmessungen zur Landebahn sowie Abweichungen zur Kurslinie durch Kreuzpeilungen zu bekannten und ebenfalls in der Datenbank abgelegten Zielen fortlaufend korrigieren, bis das präzise Aufsetzen auf der gewählten Landeschwelle erfolgt ist und das Luftfahrzeug sicher ausrollen kann.
Richtungs- und Kursänderungen können beispielsweise an den durch die Platzrunde vorgeschriebenen Orten erfolgen und in der Betriebsart "Koppelnavigation" beispielsweise fest vereinbarten Standardkurven folgen.

Gemäß einer bevorzugten Ausführungsform ist die Flugkontrolleinheit weiter dafür vorgesehen, das Luftfahrzeug nach erfolgter Landung auf dem ausgewählten Landeplatz anhand abgespeicherter Informationen über die örtlichen Begebenheiten an eine sichere Parkposition zu leiten. Vorzugsweise sind in dem Speicher, auf den die Flugkontrolleinheit des unbemannten Luftfahrzeugs Zugriff hat, Daten über örtliche Begebenheiten, wie beispielsweise die Start-/Landebahnen, Rollbahnen, Vorfeld und weitere luftseitige Einrichtungen des ausgewählten Landeplatzes abgespeichert. Anhand dieser Informationen kann das unbemannte Luftfahrzeug zu einem sicheren Abstellplatz rollen, soweit dies aus eigener Kraft möglich ist. Alternativ kann das unbemannte Luftfahrzeug mit externer Hilfe zu einem sicheren Stellplatz gebracht werden. Dies hat den Vorteil, dass der Landeplatz für den normalen Flugverkehr wieder freigegeben werden kann, sobald das unbemannte Luftfahrzeug einen sicheren Stellplatz erreicht hat, bzw. sobald es die Landebahn verlassen hat.

Weiter wird eine Bodenkontrollstation zur Steuerung und/oder Überwachung wenigstens eines unbemannten Luftfahrzeugs angegeben, die nicht unter den Schutzumfang der Ansprüche fällt. Die Bodenkontrollstation weist ein Kommunikationssystem, eingerichtet zur Kommunikation mit dem unbemannten Luftfahrzeug und zur Kommunikation mit einer Flugverkehrskontrolle, aufweisend eine Mehrzahl von Kommunikationsverbindungen, auf. Weiter weist die Bodenkontrollstation eine Überwachungseinrichtung, eingerichtet zur Überwachung der Mehrzahl von Kommunikationsverbindungen der Bodenkontrollstation mit dem Luftfahrzeug und der Flugverkehrskontrolle, auf. Falls die Überwachungseinrichtung feststellt, dass alle Kommunikationsverbindungen der Mehrzahl von . Kommunikationsverbindungen zwischen der Bodenkontrollstation und dem Luftfahrzeug unterbrochen ist, werden Informationen über die Navigationsdaten und Kennungsdaten des Luftfahrzeugs der Flugverkehrskontrolle übermittelt.

Die Kommunikationsverbindung zwischen der Bodenkontrollstation und der Flugverkehrskontrolle bzw. Flugverkehrskontrollstelle kann beispielsweise eine digitale Kommunikationsverbindung oder eine analoge Kommunikationsverbindung sein.

Durch Übermittlung des Ausfalls der Kommunikationsverbindungen zu dem unbemannten Luftfahrzeug an die Flugverkehrskontrolle, kann somit beim Auftreten eines irreversiblen Datenlinkausfalls automatisch eine sofortige Vorwarnung über die Gefährdung anderer Verkehrsteilnehmer durch ein nicht-kooperatives Luftfahrzeug ausgelöst werden.

Zum Zeitpunkt eines irreversiblen und vollständigen Datenlinkausfalls wird von der Bodenkontrollstation aus eine Botschaft an die Flugverkehrskontrolle geschickt, mit der der Datenlinkausfall erklärt wird und die letztgültigen Navigations- und Kennungsdaten übermittelt werden.

Die Flugverkehrskontrollstelle kann daraufhin den Luftraum in der Kontrollzone für andere Luftfahrzeuge vorübergehend sperren und muss dem unbemannten Luftfahrzeug eine bevorzugte Landung einräumen.

Nach dem Stand der aktuellen Vorgaben im Luftverkehr sollte das Einleiten des Landeanflugs eines unbemannten Luftfahrzeugs ohne Genehmigung durch die Flugverkehrskontrollstelle im Regelfall nicht autonom durchgeführt werden. Im Falle eines irreversiblen Datenlinkausfalls ist das hierin beschriebene Verfahren somit zumindest zum aktuellen Zeitpunkt entsprechend vorher mit der Flugverkehrskontrollstelle zu vereinbaren. Falls ein Ausfall der Kommunikationsverbindung (Datenlink) zu der Bodenstation erfolgt, nachdem beispielsweise ein Instrumentenlandesystem (ILS) bereits aktiviert worden ist, wenn also dem unbemannten Luftfahrzeug die Landegenehmigung bereits von der Flugverkehrskontrolle erteilt worden ist, ist das beschriebene System zunächst redundant, zumal es sich um eine vorgesehene Landung handelt, die nicht mehr abgebrochen werden braucht. Das in dieser Erfindung beschriebene Verfahren dient vorzugsweise der Landung auf Ausweichflugplätzen und Landebahnen, die kein ILS haben, sowie in den Fällen, in denen das ILS noch nicht aktiviert worden ist.

Für den Fall, dass vom Datenlinkausfall, d.h. dem Ausfall aller Kommunikationsverbindungen zwischen dem unbemannten Luftfahrzeug und der Bodenstation, zwei oder mehrere Luftfahrzeuge gleichzeitig betroffen sind, ist sehr unwahrscheinlich. Gemäß dem hierin beschriebenen Verfahren würde die Sperrung des Luftraums unverzüglich nach Bestätigung des Datenlinkausfalls des ersten Flugzeugs erfolgt, welches ihn gemeldet hat, so dass das zweite UAV, das z. B. eine Sekunde später betroffen ist, nicht mehr oder jedenfalls nicht priorisiert auf diesem Flugplatz landen dürfte, ehe nicht das erste gelandet ist und die Sperrung wieder aufgehoben wurde. Das zweite unbemannte Luftfahrzeug könnte beispielsweise seine Landung verschieben, bis die Landebahn wieder freigeben wäre. Sofern der Datenlinkausfall nicht wirklich exakt gleichzeitig auftritt, würden zu diesem Zeitpunkt aber weitere unbemannte Luftfahrzeuge bereits die Meldung von der Luftraumsperrung erhalten haben. Dies könnte beispielsweise dadurch erfolgen, dass bei mehrfach redundanten Datenlinks bereits bei Ausfall der vorletzten Kommunikationsverbindung (in der Regel dürften nicht alle zu dem exakt gleichen Zeitpunkt ausfallen) oder noch früher Informationen bzgl. Sperrung und Landeerlaubnis ausgetauscht werden könnten, also dem Kollisionsgegner noch rechtzeitig zur Kenntnis gebracht werden könnten. Folglich könnte beispielsweise auf Positionsdaten des Kollisionsgegners durch Austausch von GPS-Daten stets zurückgegriffen werden und ein ausweichregelkonformes Verfahren angewandt werden. Ein mehrfach totaler Datenlinkausfall wäre folglich sehr unwahrscheinlich, und das Verhalten nach den vorher vereinbarten Regeln könnte beispielsweise die Verkehrssicherheit im Rahmen der Spezifikation der Ausfallshäufigkeit sicherstellen.

In den Zeichnungen beziehen sich im Allgemeinen gleiche Bezugszeichen auf die gleichen Teile über die verschiedenen Ansichten hinweg. Die Zeichnungen sind nicht notwendigerweise maßstabsgetreu; Wert wird stattdessen im Allgemeinen auf die Veranschaulichung der Prinzipien der Erfindung gelegt. In der folgenden Beschreibung werden verschiedene Ausführungsformen der Erfindung beschrieben unter Bezugnahme auf die folgenden Zeichnungen, in denen:
- FIG. 1a und 1b: eine erste Ausführungsform eines unbemannten Luftfahrzeugs und eines Flugkontrollsystems zeigen;
- FIG. 2: ein Flussdiagramm einer Ausführungsform eines Verfahrens zur sicheren Landung eines unbemannten Luftfahrzeugs zeigt;
- FIG. 3: eine Ausführungsform einer Bodenkontrollstation zur Steuerung und/oder Überwachung wenigstens eines unbemannten Luftfahrzeugs zeigt; und
- FIG. 4: eine Skizze möglicher Flugrouten zur Landung eines unbemannten Luftfahrzeugs zeigt.

Die folgende detaillierte Beschreibung nimmt Bezug auf die beigefügten Zeichnungen, welche zur Erläuterung spezifische Details und Ausführungsformen zeigen, in welchem die Erfindung praktiziert werden kann.

Das Wort "beispielhaft" wird hierin verwendet mit der Bedeutung "als ein Beispiel, Fall oder Veranschaulichung dienend". Jede Ausführungsform oder Ausgestaltung, die hierin als "beispielhaft" beschrieben ist, ist nicht notwendigerweise als bevorzugt oder vorteilhaft gegenüber anderen Ausführungsformen oder Ausgestaltungen auszulegen.

In der folgenden ausführlichen Beschreibung wird auf die beigefügten Zeichnungen Bezug genommen, die einen Teil dieser Beschreibung bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

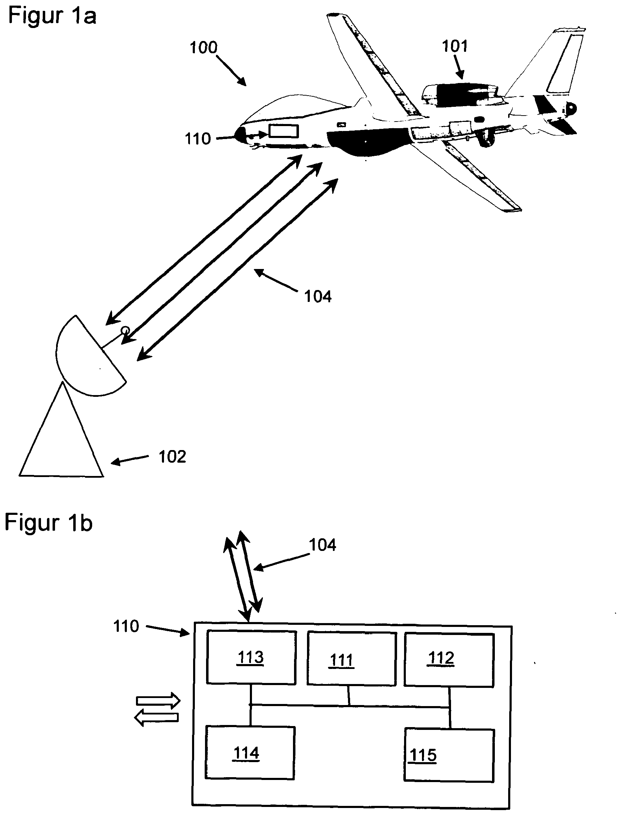

Die Figuren 1a und 1b zeigen eine erste Ausführungsform eines unbemanntes Luftfahrzeugs 100 und eines Flugkontrollsystems 110.

Figur la zeigt eine Ausführungsform eines unbemannten Luftfahrzeugs 100 und eine Bodenkontrollstation 102. Die Bodenkontrollstation 102 ist eingerichtet zur Steuerung und/oder Überwachung des Luftfahrzeugs 100. Zur Steuerung und/oder Überwachung des Luftfahrzeugs 100 bestehen zwischen der Bodenkontrollstation 102 und dem Luftfahrzeug 100 eine Mehrzahl von Kommunikationsverbindungen 104.

Das unbemannte Luftfahrzeug 100 weist ein Auftriebs- und Vortriebssystem 101 und ein Flugkontrollsystem 110 auf. Das Flugkontrollsystem 110 weist eine Flugkontrolleinheit 111, ein Navigationssystem 112, ein Kommunikationssystem 113 und ein Aktuatoriksystem 114 auf. Das Flugkontrollsystem 110 ist im weiteren Detail in Figur 1b dargestellt.

Die Flugkontrolleinheit 111 des Flugkontrollsystems 110 ist vorgesehen, anhand von Daten aus dem Navigationssystem 112 und/oder Daten von einer Bodenkontrollstation 102 Steuerkommandos zu berechnen, die dem Aktuatoriksystem 114 zugeführt werden. Das Aktuatoriksystem 114 verwendet die Steuerkommandos zur Ansteuerung des Auftriebs- und Vortriebssystems 101 des Luftfahrzeugs 100.

Das Flugkontrollsystem 110 weist weiter eine Überwachungseinheit 115 auf. Die Überwachungseinheit 115 ist eingerichtet zur Überwachung des Kommunikationssystems 113. Hierbei ermittelt die Überwachungseinheit 115, ob alle Kommunikationsverbindungen 104 einer Mehrzahl von Kommunikationsverbindungen 104 zwischen dem Luftfahrzeug 100 und der Bodenkontrollstation 102 unterbrochen sind. Die Überwachungseinheit 115 ist weiter dafür vorgesehen, bei Ermittlung einer Unterbrechung der Kommunikation 104 von dem Luftfahrzeug 100 zu der Bodenkontrollstation 102, die Flugkontrolleinheit 111 anhand von gespeicherten Daten über aktuelle Flugbedingungen und nahegelegene Landeplätze zu veranlassen, das Luftfahrzeug 100 an einem geeigneten Landeplatz sicher zu landen.

Figur 1b zeigt eine Ausführungsform eines Flugkontrollsystems 110. Das Flugkontrollsystem 110 weist eine Flugkontrolleinheit 111, ein Navigationssystem 112, ein Kommunikationssystem 113, ein Aktuatoriksystem 114 und eine Überwachungseinheit 115 auf. Die Flugkontrolleinheit 111, das Navigationssystem 112, das Kommunikationssystem 113, das Aktuatoriksystem 114 und die Überwachungseinheit 115 sind miteinander mittels elektrischen Leitungen oder über ein Bussystem (nicht dargestellt) miteinander verbunden. Die Flugkontrolleinheit 111 ist vorgesehen, anhand von Daten aus dem Navigationssystem 112 und/oder Daten von einer Bodenkontrollstation 102 Steuerkommandos zu berechnen, die dem Aktuatoriksystem 114 zugeführt werden. Das Aktuatoriksystem 114 verwendet die Steuerkommandos zur Ansteuerung des Auftriebs- und Vortriebssystems 101 des Luftfahrzeugs 100. Das Navigationssystem 112 empfängt beispielsweise GNSS-Daten zur Positionsbestimmung des Luftfahrzeugs 100. Über das Kommunikationssystem 113 kommuniziert das Luftfahrzeug 100 über eine Mehrzahl von Kommunikationsverbindungen 104 mit der Bodenkontrollstation 102.

Obwohl das Flugkontrollsystem in den Figuren 1a und 1b nur in einfacher Ausführung dargestellt sind, können Teile des Flugkontrollsystems oder das gesamte Flugkontrollsystem auch redundant in dem Luftfahrzeug vorhanden sein. Hierbei kann eine Entscheidungseinheit (nicht dargestellt) vorhanden sein, die anhand der redundant vorhandenen Ergebnisse aus den mehrfach vorhandenen Einheiten Entscheidungen nach vorgegebenen Regeln trifft. Derartige Entscheidungseinheiten sind in der Luftfahrt bekannt.

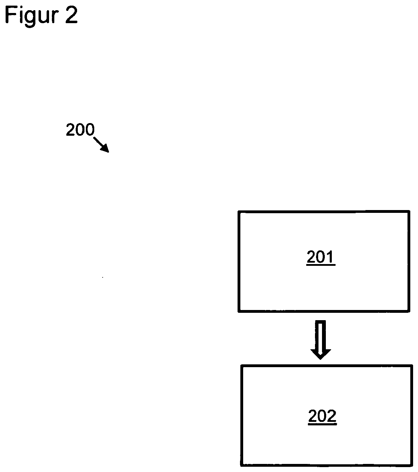

Figur 2 zeigt ein Flussdiagramm 200 einer Ausführungsform eines Verfahrens zur sicheren Landung eines unbemannten Luftfahrzeugs.

In Schritt 201 des Verfahrens wird ermittelt, ob alle Kommunikationsverbindungen einer Mehrzahl von Kommunikationsverbindungen zwischen dem Luftfahrzeug und einer Bodenkontrollstation, eingerichtet zur Steuerung und/oder Überwachung des Luftfahrzeugs, unterbrochen sind. In Schritt 202 wird bei Ermittlung einer Unterbrechung der Kommunikationsverbindung zwischen dem Luftfahrzeug und der Bodenkontrollstation das Luftfahrzeug an einem geeigneten Landeplatz anhand von gespeicherten Daten über die aktuellen Flugbedingungen und nahegelegenen Landeplätze gelandet.

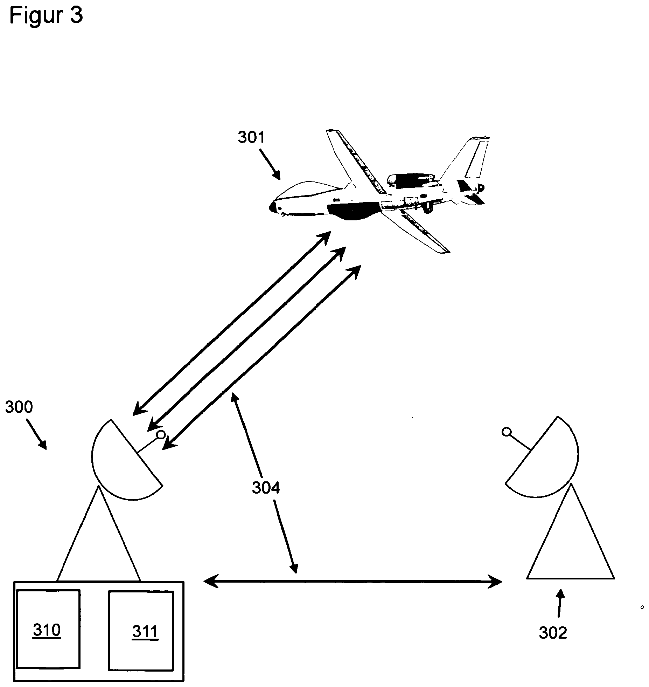

Figur 3 zeigt eine Bodenkontrollstation 300 zur Steuerung und/ oder Überwachung wenigstens eines unbemannten Luftfahrzeugs 301. Die Bodenkontrollstation 300 weist ein Kommunikationssystem 310 auf. Das Kommunikationssystem 310 ist eingerichtet zur Kommunikation mit dem unbemannten Luftfahrzeug 301 und zur Kommunikation mit einer Flugverkehrskontrolle 302. Hierzu weist die Kommunikation wenigstens zwischen der Bodenkontrollstation 300 und dem unbemannten Luftfahrzeug 301 eine Mehrzahl von Kommunikationsverbindungen 304 auf. Die Bodenkontrollstation 304 weist weiter eine Überwachungseinrichtung 311 auf. Die Überwachungseinrichtung 311 ist eingerichtet zur Überwachung der Mehrzahl von Kommunikationsverbindungen 304 der Bodenkontrollstation 300 mit dem Luftfahrzeug 301 und der Flugverkehrskontrolle 302. Falls die Überwachungseinrichtung 311 feststellt, dass alle Kommunikationsverbindungen 304 der Mehrzahl von Kommunikationsverbindungen 304 zwischen der Bodenkontrollstation 300 und dem Luftfahrzeug 301 unterbrochen sind, werden Informationen über die aktuellen Navigationsdaten und die Kennungsdaten des Luftfahrzeugs 301 der Flugverkehrskontrolle 302 übermittelt.

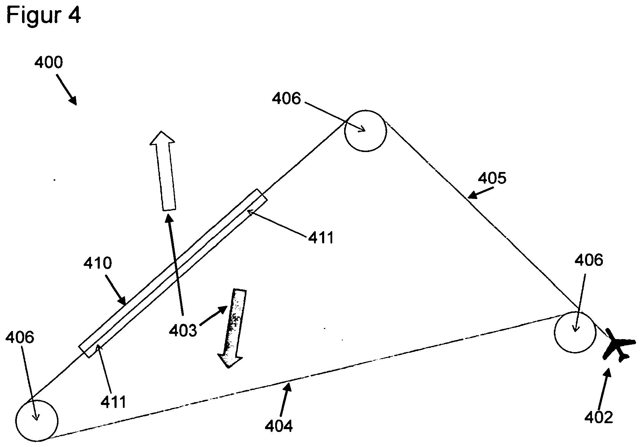

Figur 4 zeigt eine Skizze 400 möglicher Flugrouten zur sicheren Landung eines unbemannten Luftfahrzeugs 402 auf einem Landeplatz 410. Abhängig von der Windrichtung 403 ermittelt das unbemannte Luftfahrzeug 402 eine Anflugroute 404, 405 entsprechenden der lokal vorgegebenen Platzrunde. Abhängig von der Windrichtung erkennt das Flugkontrollsystem des unbemannten Luftfahrzeugs bei Ausfall aller Kommunikationsverbindung anhand der bereitstehenden geografischen und meteorologischen Informationen die entsprechende Landeschwelle. Beispielsweise wählt das Luftfahrzeug 402 bei nördlicher Windrichtung 403 eine Flugroute 404, die das Luftfahrzeug über zwei Standardkurven 406 im korrekten Anflugwinkel auf der Landeschwelle 411 der Landebahn 410 aufsetzen lässt. Bei südlicher Windrichtung 403 wird beispielsweise die Flugroute 405 gewählt, die das Luftfahrzeug 402 über eine Standardkurve 406 an der gegenüberliegenden Landeschwelle 411 der Landebahn 410 aufsetzen lässt. Der Ort bzw. Zeitpunkt des Ausfalls aller Kommunikationsverbindungen zwischen dem Luftfahrzeug 402 und der Bodenkontrollstation (nicht dargestellt) kann bei der in Figur 4 dargestellten Ausführungsform beispielsweise bei dargestelltem Symbol für das Luftfahrzeug 402 erfolgt sein. Erfolgt der Ausfall an einem Ort bzw. zu einem Zeitpunkt zu dem das Luftfahrzeug 402 noch weiter entfernt ist von dem geeigneten nächsten Landeplatz, wird das Luftfahrzeug entsprechend der Planung der Flugroute entsprechend an die Platzrunde des Landeplatzes herangeführt.

### Bezugszeichenliste

- 100: Unbemanntes Luftfahrzeug
- 101: Auftriebs- und Vortriebssystem
- 102: Bodenkontrollstation
- 110: Flugkontrollsystem
- 111: Flugkontrolleinheit
- 112: Navigationssystem
- 113: Kommunikationssystem
- 114: Aktuatoriksystem
- 115: Überwachungseinheit
- 116: Speicher
- 200: Verfahren
- 201-202: Schritte des Verfahrens
- 300: Bodenkontrollstation
- 301: Luftfahrzeug
- 302: Flugverkehrskontrolle
- 304: Kommunikationsverbindung
- 310: Kommunikationssystem
- 311: Überwachungseinrichtung

## Patentansprüche

1. Verfahren (200) zur sicheren Landung eines unbemannten Luftfahrzeugs, aufweisend die Schritte:
Ermitteln, ob alle Kommunikationsverbindungen einer Mehrzahl von Kommunikationsverbindungen zwischen dem Luftfahrzeug und einer Bodenkontrollstation, eingerichtet zur Steuerung und/oder Überwachung des Luftfahrzeugs, unterbrochen sind (201); und
schnellstmögliches Landen des Luftfahrzeugs an einem geeigneten Landeplatz anhand von in einem Navigationssystem des unbemannten Luftfahrzeugs gespeicherten Daten über die aktuellen Flugbedingungen und nahegelegenen Landeplätze, bei Ermittlung einer irreversiblen Unterbrechung der Kommunikationsverbindung zwischen dem Luftfahrzeug und der Bodenkontrollstation (202);
**dadurch gekennzeichnet, dass**
die gespeicherten Daten wenigstens die nahegelegenen Landeplätze und die aktuellen Wind- und Wetterdaten der näheren Umgebung des Luftfahrzeugs (100) und der nahegelegenen Landeplätze umfassen, wobei während des Fluges sukzessive für wenigstens einen Teil des Flugabschnittes die gespeicherten Daten über eine Kommunikationsverbindung mit der Bodenkontrollstation nachgeladen werden;
wobei anhand der gespeicherten Wind- und Wetterdaten von den nahegelegenen Landeplätzen bei einer zu erwartenden Ankunftszeit an dem Landeplatz, der geeignete Landeplatz nach festgelegten Regeln ausgewählt wird; und
wobei das Verfahren weiter den Schritt aufweist:
Ermitteln durch die Bodenkontrollstation ob alle Kommunikationsverbindungen der Mehrzahl von Kommunikationsverbindungen zwischen dem Luftfahrzeug (100) und der Bodenkontrollstation unterbrochen sind und Übermittlung der Information über die Unterbrechung an eine Luftverkehrskontrolle;
wobei die festgelegten Regeln dem unbemannten Luftfahrzeug und der Luftverkehrskontrolle bekannt sind, so dass bei Unterbrechung der Kommunikationsverbindungen der identische Landeplatz als geeigneter Landeplatz ausgewählt wird; und
wobei die Luftverkehrskontrolle wenigstens einen Teil eines zur Verfügung stehenden Luftraums und den geeigneten Landeplatz für eine sichere Landung des Luftfahrzeugs (100) sperrt.

## Claims

1. Method (200) for safely landing an unmanned aircraft, comprising the steps of:
determining whether all of the communication links of a multiplicity of communication links between the aircraft and a ground control station, set up for controlling and/or monitoring the aircraft, are interrupted (201); and
on determining an irreversible interruption of the communication link between the aircraft and the ground control station (202), landing the aircraft as quickly as possible at a suitable landing site on the basis of data stored in a navigation system of the unmanned aircraft concerning the current flying conditions and nearby landing sites;
**characterized in that**
the stored data comprise at least the nearby landing sites and the current wind and weather data relating to the immediate surroundings of the aircraft (100) and the nearby landing sites, wherein during the flight the stored data are successively reloaded via a communication link with the ground control station for at least part of the stage of the flight;
wherein, on the basis of the stored wind and weather data of the nearby landing sites at an expected time of arrival at the landing site, the suitable landing site is selected according to defined rules; and
wherein the method further comprises the step of:
determining by the ground control station whether all of the communication links of the multiplicity of communication links between the aircraft (100) and the ground control station are interrupted and transmitting information concerning the interruption to an air traffic control centre;
wherein the defined rules are known to the unmanned aircraft and the air traffic control, so that, if there is an interruption in the communication links, the identical landing site is selected as a suitable landing site; and
wherein the air traffic control centre closes at least part of an available airspace and the suitable landing site for safe landing of the aircraft (100).

## Revendications

1. Procédé (200) pour l'atterrissage sécurisé d'un aéronef sans pilote, présentant les étapes suivantes :
établissement du fait que toutes les liaisons de communication parmi une pluralité de liaisons de communication entre l'aéronef et une station de contrôle au sol, prévues pour commander et/ou contrôler l'aéronef, sont coupées (201) ou non ; et
atterrissage le plus rapidement possible de l'aéronef sur une aire d'atterrissage appropriée à l'aide de données, mémorisées dans un système de navigation de l'aéronef sans pilote, concernant les conditions de vol actuelles et les aires d'atterrissage proches, lors de l'établissement du fait qu'il existe une coupure irréversible de la liaison de communication entre l'aéronef et la station de contrôle au sol (202) ;
**caractérisé en ce que**
les données mémorisées comprennent au moins les aires d'atterrissage proches et les données actuelles relatives au vent et aux conditions météorologiques de l'environnement le plus proche de l'aéronef (100) et des aires d'atterrissage proches, les données mémorisées successivement pour au moins une partie de la section de vol étant téléchargées pendant le vol par le biais d'une liaison de communication avec la station de contrôle au sol ;
à l'aide des données mémorisées relatives au vent et aux conditions météorologiques, l'aire d'atterrissage appropriée étant sélectionnée en fonction de réglages établis parmi les aires d'atterrissage proches, en tenant compte du temps nécessaire pour arriver à l'aire d'atterrissage; et
le procédé présentant en outre l'étape suivante :
établissement, par la station de contrôle au sol, du fait que toutes les liaisons de communication parmi la pluralité de liaisons de communication entre l'aéronef (100) et la station de contrôle au sol sont coupées ou non et transmission de l'information concernant la coupure à un contrôle du trafic aérien ;
les réglages établis étant connus par l'aéronef sans pilote et par le contrôle du trafic aérien de telle sorte qu'en cas d'interruption des liaisons de communication, la même aire d'atterrissage que l'aire d'atterrissage appropriée soit sélectionnée ; et
le contrôle du trafic aérien bloquant au moins une partie d'un espace aérien disponible et l'aire d'atterrissage appropriée pour un atterrissage sécurisé de l'aéronef (100).
